# EUROPEAN PATENT APPLICATION

(11) **EP 4 696 986 A1**
(43) Date of publication of application: **18.02.2026**
(21) Application number: 25192060.9
(22) Date of filing: 28.07.2025
(51) Int. Cl.: G01C 21/20, G01C 21/36, G08B 23/00, G08B 25/00, G05D 3/00

(54) **INFORMATION PROCESSING APPARATUS, INFORMATION PROCESSING METHOD, AND INFORMATION PROCESSING PROGRAM**

(30) Priority: 15.08.2024 JP 2024135779
(71) Applicant: Yokogawa Electric Corporation, Tokyo 180-8750 (JP)
(72) Inventor: HARA, Akari, Musashinoshi, Tokyo, 180-8750 (JP); TANIGAWA, Youhei, Musashinoshi, Tokyo, 180-8750 (JP); SAKURAI, Yasuki, Musashinoshi, Tokyo, 180-8750 (JP)
(74) Representative: Hoffmann Eitle

(57) **Abstract**

There is provided an information processing apparatus including: a virtual map acquisition unit which acquires a three-dimensional virtual map corresponding to a real space in which a moving object moves; a sense information acquisition unit which acquires sense information acquired by the moving object in the real space; and a display unit which displays the sense information on the virtual map. The sense information is information sensed by instruments included in the real space. The display unit may display a position of at least one instrument among the instruments on the virtual map, and may display, when one instrument among the instruments is specified, the sense information sensed by the specified instrument. The display unit may display, on the virtual map, positions of candidates for at least one instrument among the instruments from which the moving object is to acquire the sense information. The information processing apparatus may further include a destination setting unit which sets, when one candidate among the candidates is specified, a position of the specified candidate as a destination of the moving object.

## Description

### BACKGROUND

### 1. TECHNICAL FIELD

The present invention relates to an information processing apparatus, an information processing method, and an information processing program.

### 2. RELATED ART

Patent Document 1 discloses that "the map is a three-dimensional map" (claim 8).

Patent Document 2 discloses that "three-dimensional environmental map information is generated based on distance information acquired by a distance sensor" (claim 1).

Patent Document 3 discloses that "various sensors which detect physical quantities of surrounding environments, such as a temperature sensor 44..., are attached to a robot body 10" (paragraph 0022).

Patent Document 4 discloses "sensing an obstacle entering the monitoring region; and sensing an obstacle in each of different directions with respect to the machine main body" (claim 1).

Patent Document 5 discloses that "an environmental map expressing a three-dimensional position of an object present in a real space, is dynamically generated" (paragraph 0034).

### Prior Art Documents

### Patent Document

Patent Document 1: Japanese Patent No. 7452706
Patent Document 2: Japanese Patent Application Publication No. 2014-157478
Patent Document 3: Japanese Patent Application Publication No. 2015-1810
Patent Document 4: Japanese Patent Application Publication No. 2018-141314
Patent Document 5: Japanese Patent Application Publication No. 2024-62741

### SUMMARY

In a first aspect of the present invention, there is provided an information processing apparatus. The information processing apparatus includes: a virtual map acquisition unit which acquires a three-dimensional virtual map corresponding to a real space in which a moving object moves; a sense information acquisition unit which acquires sense information acquired by the moving object in the real space; and a display unit which displays the sense information on the virtual map. The sense information is information sensed by instruments included in the real space. An instrument may be provided in an apparatus included in the real space. The apparatus may be an apparatus that processes a substance.

The display unit may display a position of at least one instrument among the instruments on the virtual map, and may display, when one instrument among the instruments is specified, the sense information sensed by the one specified instrument. The display unit may display the sense information at a position, on the virtual map, which corresponds to a position where the sense information is acquired by the moving object.

In any information processing apparatus described above, the display unit may display, on the virtual map, positions of candidates for at least one instrument among the instruments from which the moving object is to acquire the sense information. Any information processing apparatus described above may further include a destination setting unit which sets, when one candidate among the candidates is specified, a position among the positions of the specified candidate as a destination of the moving object.

In any information processing apparatus described above, the display unit may display, on the virtual map, positions of candidates for a plurality of instruments, each of which is the instrument from which the moving object is to continuously acquire the sense information. Any information processing apparatus described above may further include a destination setting unit which sets a position among the positions of one candidate among the candidates from which the sense information is to be initially acquired, as a destination of the moving object.

Any information processing apparatus described above may further include a determination unit which determines an occurrence of an abnormality in the real space, based on a magnitude relationship between the sense information and a predetermined threshold value of the sense information. The threshold value of the sense information may be determined for each type of the information that is sensed. The threshold value of the sense information determined for each type may be stored in a storage unit.

In any information processing apparatus described above, the display unit may display, on the virtual map, order of an occurrence of the abnormality in an identifiable manner. The display unit may reproduce and display the occurrences of the abnormalities on the virtual map in chronological order, and may reproduce and display a time interval between the occurrences of the abnormalities.

Any information processing apparatus described above may further include a storage unit which stores order of an occurrence of the abnormality. The display unit may reproduce and display an occurrence of the abnormality on the virtual map in chronological order.

In any information processing apparatus described above, the determination unit may determine a degree of significance of the abnormality, based on a difference between the sense information and the threshold value. The display unit may display, on the virtual map, the degree of significance in an identifiable manner.

In any information processing apparatus described above, the moving object may have a sense information receiving unit which receives the sense information. The display unit may display, on the virtual map, the instrument from which the sense information receiving unit is not able to receive the sense information.

In any information processing apparatus described above, the sense information receiving unit may be an image capture unit which captures an image of the instrument. The image capture unit may receive the sense information by an image in which the instrument is captured. The display unit may display, on the virtual map, an image of the instrument from which the image capture unit is not able to receive the sense information.

In a second aspect of the present invention, there is provided an information processing method. The information processing method includes: acquiring a three-dimensional virtual map corresponding to a real space in which a moving object moves; acquiring sense information acquired by the moving object in the real space; and displaying the sense information on the virtual map. The sense information is information sensed by instruments included in the real space.

In a third aspect of the present invention, there is provided an information processing program. The information processing program causes a computer to execute the information processing method.

The summary clause does not necessarily describe all necessary features of the embodiments of the present invention. In addition, the invention may also be a sub-combination of the features described above.

### BRIEF DESCRIPTION OF THE DRAWINGS

Fig. 1 is a schematic top plan view showing an example of a real space 110 in which a moving object 90 moves.
Fig. 2 is a perspective view showing an example of a three-dimensional virtual map 120 corresponding to the real space 110.
Fig. 3 is a block diagram showing an example of an information processing apparatus 100.
Fig. 4 is a diagram showing an example of a display mode of a display unit 30.
Fig. 5 is a diagram showing another example in the display mode of the display unit 30.
Fig. 6 shows an example of a configuration of a computer 1200 in which a plurality of aspects of the present invention may be embodied entirely or partially.

### DESCRIPTION OF EXEMPLARY EMBODIMENTS

The present invention will be described below through embodiments of the invention, but the following embodiments do not limit the invention according to the claims. In addition, not all of the combinations of features described in the embodiments are essential to the solution of the invention.

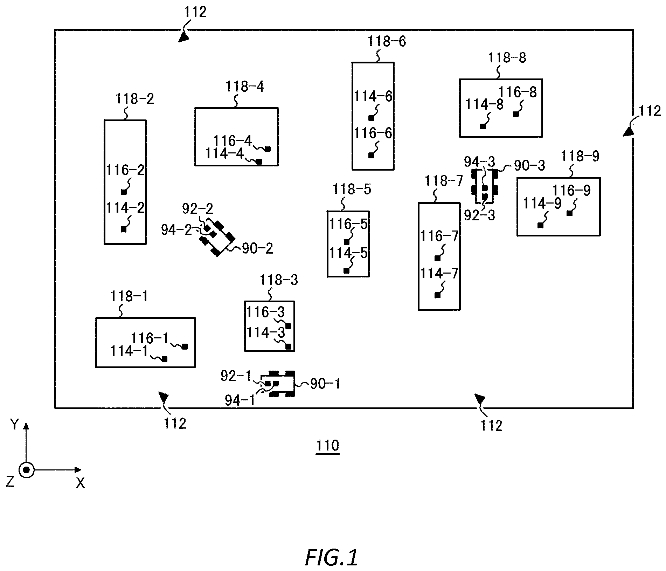

Fig. 1 is a schematic top plan view showing an example of a real space 110 in which a moving object 90 moves. In the example of Fig. 1, a plurality of moving objects 90 move in the real space 110. In the example of Fig. 1, the plurality of moving objects 90 are a moving object 90-1 to a moving object 90-3. The real space 110 is, for example, a space of a plant or the like. The real space 110 may be an indoor space, or may be an outdoor space. The real space 110 may be a space that is difficult for humans to enter, such as a space where an entry is highly dangerous due to an environmental influence of radiation, a toxic gas, or the like; or a space where an entry itself is difficult due to a presence of an obstacle or the like.

In the real space 110, road surfaces 112 may be arranged, and instruments 114 may be included. When the real space 110 is a space such as a plant, a road surface 112 is a floor surface of the plant. The moving object 90 may travel on the road surface 112.

An instrument 114 senses sense information. The instrument 114 may be a measuring instrument that measures a physical quantity of a measurement target in the real space 110. The instrument 114 includes, for example, a concentration measuring instrument that measures a concentration of a gas of a particular type (for example, CO₂ (carbon dioxide), O₂ (oxygen), or the like); a radiation dose measuring instrument that measures a radiation dose; a flow measuring instrument that measures a flow rate of a fluid; a pressure measuring instrument that measures an air pressure in the real space 110; a sound measuring instrument that measures abnormal noise in the real space 110; and others.

The sense information that is sensed by the instrument 114 may be a physical quantity measured by the measuring instrument that measures the physical quantity of the measurement target in the real space 110. For example, when the instrument 114 is a concentration measuring instrument, a radiation dose measuring instrument, a flow measuring instrument, a pressure measuring instrument, or a sound measuring instrument, each of pieces of sense information that is sensed by the instrument 114 is a concentration, a radiation dose, a flow rate, a pressure, or a sound pressure.

The instrument 114 may be provided in an apparatus 118 included in the real space 110. The apparatus 118 is, for example, an apparatus that processes a substance. The expression of processing a substance, refers to changing a state of the substance. The expression of changing a state of a substance may refer to changing a shape of the substance, or changing at least one of a characteristic or a chemical formula of the substance through a chemical reaction or the like. The instrument 114 may measure the physical quantity of the measurement target in the apparatus 118. When the apparatus 118 is an apparatus that processes the substance, a housing of the apparatus 118 may be provided with a meter or the like indicating the physical quantity measured by the instrument 114. For example, when the apparatus 118 is an apparatus (for example, a nuclear reactor) that changes the state of the substance while causing a fluid to flow, the apparatus 118 may be provided with a flow meter that measures a flow rate of the fluid, as the instrument 114. The housing of the apparatus 118 may be provided with a meter or the like indicating the flow rate measured by the flow meter. For example, when the apparatus 118 is an apparatus that changes the state of the substance by using a gas of a particular type (for example, a toxic gas), the instrument 114 may be a flow meter that measures a flow rate of the gas, a pressure meter that measures a pressure of the gas, or the like. The housing of the apparatus 118 may be provided with a meter or the like indicating the flow rate, the pressure, or the like, measured by the instrument 114 such as a flow meter and a pressure meter.

The apparatus 118 included in the real space 110 may be an apparatus that generates an electromagnetic wave. For example, the apparatus 118 that generates the electromagnetic wave is an apparatus that generates radiation, an apparatus that generates light with wavelengths ranging from ultraviolet light to infrared light, or the like. For example, when the apparatus 118 is an apparatus (for example, an X-ray diffraction apparatus) that generates the radiation, the apparatus 118 that generates the electromagnetic wave may be provided with a wattmeter indicating an output of the radiation, as the instrument 114. The housing of the apparatus 118 may be provided with a meter or the like indicating the output of the radiation measured by the wattmeter.

The sense information that is sensed by the instrument 114 may include the physical quantity measured by the instrument 114 provided in the apparatus 118 included in the real space 110. For example, when the apparatus 118 is an apparatus (for example, a nuclear reactor) that changes the state of the substance while causing a fluid to flow, the sense information that is sensed by the instrument 114 may be the flow rate of the fluid measured by the instrument 114 (the flow meter) provided in the apparatus 118. For example, when the apparatus 118 is an apparatus that changes the state of the substance by using a gas of a particular type, the sense information that is sensed by the instrument 114 may be the flow rate or the pressure of the gas measured by each of the flow meter or the pressure meter provided in the apparatus 118. For example, when the apparatus 118 is an apparatus that generates an electromagnetic wave, the sense information that is sensed by the instrument 114 may be the output of the electromagnetic wave measured by the wattmeter provided in the apparatus 118.

The instrument 114 may include a sense information transmission unit 116 which transmits the sense information. In the example of Fig. 1, an instrument 114-1 to an instrument 114-9 have a sense information transmission unit 116-1 to a sense information transmission unit 116-9, respectively. The sense information transmission unit 116 may transmit the sense information to an outside of the instrument 114. The sense information transmission unit 116 may transmit the sense information wirelessly.

The moving object 90 may be a robot that is able to autonomously travel, or may be a robot that is able to be remotely controlled by a user 130 (described below) of an information processing apparatus 100 (described below). The moving object 90 may be a four-legged robot that moves along and in contact with the road surface 112; may be a robot of a caterpillar type or a wheel type; or may be a drone that moves through the air. The moving object 90 may be a robot that patrols the real space 110.

The moving object 90 may have a sense information receiving unit 92 which acquires sense information sensed by the instrument 114. Each of the plurality of moving objects 90 may have the sense information receiving unit 92 which receives the sense information. In the present example, the moving object 90-1 to the moving object 90-3 have a sense information receiving unit 92-1 to a sense information receiving unit 92-3, respectively. The sense information receiving unit 92 may wirelessly receive the sense information transmitted by the sense information transmission unit 116 of the instrument 114. The wireless communication may be a short range wireless communication (for example, Wifi (registered trademark), Bluetooth (registered trademark), or the like).

The sense information receiving unit 92 may be an image capture unit (described below) that captures an image indicating the sense information. The sense information may be the sense information indicated by a meter or the like provided on a housing of the apparatus 118. When the sense information receiving unit 92 is the image capture unit, each of the moving object 90-1 to the moving object 90-3 has the image capture unit. The sense information may be information on an obstacle that is not present on a virtual map 120 (described below), in the real space 110.

The plurality of moving objects 90 may have position information acquisition units 94 which acquire locations of the moving objects 90 in the real space 110. A position information acquisition unit 94 is, for example, a Global Positioning System (GPS). In the example of Fig. 1, the moving object 90-1 to the moving object 90-3 have a position information acquisition unit 94-1 to a position information acquisition unit 94-3, respectively.

In the present specification, technical matters may be described by using orthogonal coordinate axes of an x axis, a y axis, and a z axis. In the present specification, a plane parallel to the road surface 112 is set as an XY plane, and a direction perpendicular to the road surface 112 is set as a Z axis direction. In the present specification, any one direction in the XY plane is set as an X axis direction, and a direction orthogonal to the X axis in the XY plane is set as a Y axis direction. The Z axis direction may be a direction parallel to a vertical direction, and the XY plane may be a horizontal plane.

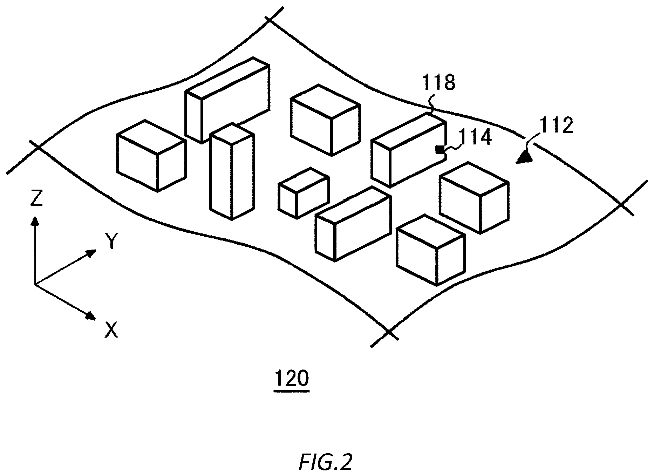

Fig. 2 is a perspective view showing an example of a three-dimensional virtual map 120 corresponding to the real space 110. The virtual map 120 may be a map created for a purpose other than a display of the sense information. The virtual map 120 may be an existing map, or may be a map created based on map information acquired by the moving object 90. The existing map is, for example, CAD data when the real space 110 is constructed, Google Maps, or the like. The map created based on map information acquired by the moving object 90 is a map created, for example, by using an SLAM (Simultaneous Localization and Mapping) technology or the like. Fig. 2 shows a region corresponding to the real space 110 in the virtual map 120. The virtual map 120 shows thereon the road surface 112 of the real space 110, the apparatus 118, and the instrument 114. In Fig. 2, only the apparatus 118 corresponding to an apparatus 118-6 in Fig. 1 is shown with signs and numerals of the apparatus 118 and the instrument 114.

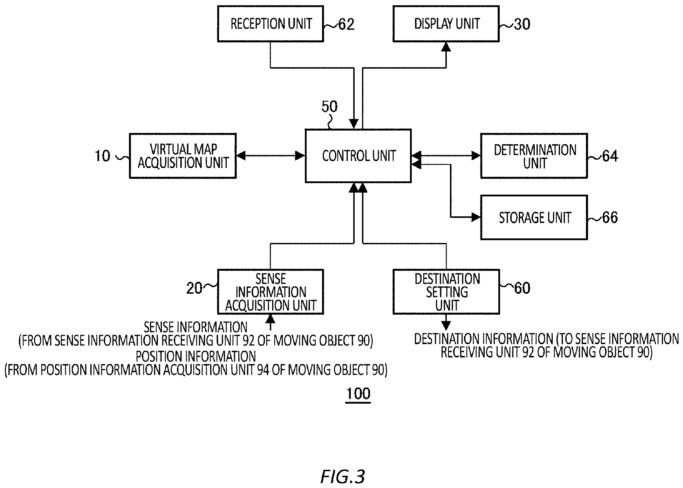

Fig. 3 is a block diagram showing an example of the information processing apparatus 100. The information processing apparatus 100 includes a virtual map acquisition unit 10, a sense information acquisition unit 20, a display unit 30, and a control unit 50. The display unit 30 is, for example, a display, a monitor, a smartphone screen, or the like. The information processing apparatus 100 may include a destination setting unit 60, a reception unit 62, a determination unit 64, and a storage unit 66. The reception unit 62 is, for example, a keyboard, a mouse, or the like.

A part or the whole of the information processing apparatus 100 may be realized by a computer. The control unit 50 may be a CPU (Central Processing Unit) of the computer. When the information processing apparatus 100 is realized by a computer, in the computer, an information processing program for causing the computer to function as the information processing apparatus 100, may be installed; or an information processing program for causing the computer to execute an information processing method described below, may be installed.

The virtual map acquisition unit 10 acquires the virtual map 120. The virtual map acquisition unit 10 may acquire the virtual map 120 via the Internet. The storage unit 66 may store the virtual map 120 acquired by the virtual map acquisition unit 10.

The sense information acquisition unit 20 acquires the sense information acquired by the moving object 90 in the real space 110. The sense information acquisition unit 20 may wirelessly acquire the sense information received by the sense information receiving unit 92 of the moving object 90. The sense information acquisition unit 20 may acquire the sense information acquired by each of the plurality of moving objects 90. The sense information receiving unit 92 of the moving object 90 may acquire the sense information time after time while the moving object 90 moves in the real space 110. The sense information acquisition unit 20 may acquire the sense information each time the moving object 90 acquires the sense information while moving.

The sense information acquisition unit 20 may acquire the sense information of the instrument 114 received by the sense information receiving unit 92 of the moving object 90, and the position information of the instrument 114 acquired by the position information acquisition unit 94 of the moving object 90, in association with each other.

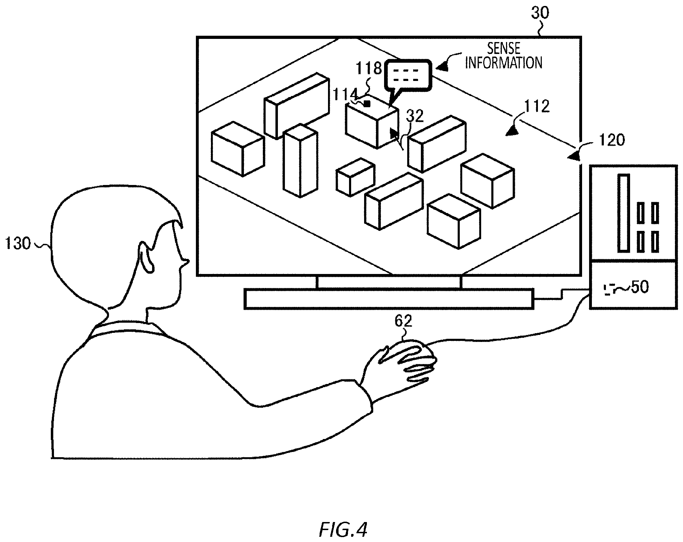

Fig. 4 is a diagram showing an example of a display mode of the display unit 30. Fig. 4 shows an example in which the user 130 of the information processing apparatus 100 looks at the display unit 30 while operating the reception unit 62. The virtual map 120 is displayed on the display unit 30.

The display unit 30 displays the sense information on the virtual map 120. This makes it possible for the user of the information processing apparatus 100 to recognize the sense information on the display unit 30. The sense information may be information that is displayed by text, or may be information that is constituted by a visual element such as text, an illustration, a figure, and a symbol. The display unit 30 may display the sense information at a position, on the virtual map 120, which corresponds to a position where the sense information is acquired by the moving object 90. In this manner, regarding the sense information, it is easy for the user of the information processing apparatus 100 to recognize, on the display unit 30, which instrument 114 in the real space 110 the sense information is from.

The reception unit 62 receives a specification of the instrument 114 on the virtual map 120. The display unit 30 may display a position of at least the one instrument 114 on the virtual map 120. When at least one instrument 114 is specified, the sense information sensed by the specified instrument 114 may be displayed. At least one instrument 114 may be specified by the reception unit 62. In the example of Fig. 4, the user 130 specifies the instrument 114-4 (refer to Fig. 1) on the display unit 30, with a pointer 32 shown on the display unit 30. In the example of Fig. 4, the sense information sensed by the specified instrument 114-4 is displayed in a word balloon on the display unit 30. When the user 130 moves the pointer 32 to a position other than the instrument 114-4, the word balloon indicating the sense information may be erased from the display unit 30.

The display unit 30 may display, on the virtual map 120, positions of candidates for at least one instrument 114 from which the moving object 90 is to acquire the sense information. A candidate for the instrument 114 may be specified by the user 130. The candidate for the instrument 114 may be the instrument 114 in which the user 130 desires to view the sense information. The user 130 may use the pointer 32 to specify, on the display unit 30, the candidate for the instrument 114 from which the sense information is to be acquired. In the example of Fig. 4, the user 130 specifies the instrument 114-4 (refer to Fig. 1) as a candidate.

The reception unit 62 may receive a specification of a candidate for the instrument 114. In the present example, the user 130 clicks the mouse that is the reception unit 62, thereby transmitting, to the control unit 50, information with a message that the candidate is specified. The display unit 30 may perform a display in a mode in which a distinction is possible between the instrument 114 from which the sense information is acquired by at least one moving object 90 in a predetermined period of time, and the instrument 114 from which the sense information is not acquired. The display unit 30 may display the instrument 114 specified by the user 130 in a mode in which a further distinction is possible.

When one candidate, from which the sense information is to be acquired, is specified, the destination setting unit 60 (refer to Fig. 3) sets a position of the specified candidate as a destination of the moving object 90. The destination setting unit 60 may transmit the set position of the destination, to the sense information receiving unit 92 of the moving object 90. The sense information receiving unit 92 may receive the position of the destination. The position information acquisition unit 94 of the moving object 90 may acquire a current position of the moving object 90. The moving object 90 may autonomously travel on the road surface 112 (refer to Fig. 1) based on the current position and the position of the destination. This makes it possible for the moving object 90 to move to the position of the instrument 114 from which the sense information is to be acquired.

The moving object 90 may acquire the information on the road surface 112 included in the virtual map 120, and determine a route to travel from the current position to the position of the destination. In another example, the destination setting unit 60 may determine the route and notify the moving object 90 of the route. The information on the road surface 112 includes: for example, a position, a shape, a gradient, a width, and a temperature of the road surface 112; a state of the road surface 112; a presence or an absence of an obstacle on the road surface 112; a position, a shape, and a size of the apparatus 118; and others. The state of the road surface 112 may be an arrangement of a bump and a groove on the road surface 112, may be a presence or an absence of a crack or the like, may be a state regarding whether the road surface 112 is wet, or may be a presence or an absence of a foreign matter such as sand on the road surface 112. The obstacle on the road surface 112 may refer to an object that is greater than a size (for example, at least any of a width, a depth, or a height) set in advance, or may refer to an object by which the moving object 90 is not able to move due to the presence of the object.

The display unit 30 may display, on the virtual map 120, positions of candidates for a plurality of instruments 114 from which the moving object 90 is to continuously acquire the sense information. The plurality of instruments 114 from which the sense information is to be continuously acquired may be specified in advance by the user 130.

The plurality of instruments 114 from which the sense information is to be continuously acquired are, for example, the plurality of instruments 114 from which it is preferable to continuously acquire the sense information. For example, when the instrument 114 is a concentration measuring instrument that measures a concentration of a gas of a particular type (for example, CO₂ (carbon dioxide)), by continuously acquiring gas concentrations measured by a plurality of concentration measuring instruments, it may be possible to obtain a finding about a distribution of a concentration of a gas of a particular type in the real space 110. For example, when the instrument 114 is a radiation dose measuring instrument, by continuously acquiring radiation doses measured by a plurality of radiation dose measuring instruments, it may be possible to obtain a finding about a distribution of a radiation dose in the real space 110. For example, when the instrument 114 is a flow measuring instrument that measures a flow rate of a fluid, by continuously acquiring flow rates measured by a plurality of flow measuring instruments, it may be possible to obtain a finding about a location of a water leak in the real space 110. For example, when the instrument 114 is a pressure measuring instrument that measures an air pressure in the real space 110, by continuously acquiring air pressures measured by a plurality of pressure measuring instruments, it may be possible to obtain a finding about a location of a gas leak in the real space 110. For example, when the instrument 114 is a sound measuring instrument that measures abnormal noise in the real space 110, by continuously acquiring sound pressures measured by a plurality of sound measuring instruments, it may be possible to obtain a finding about a location where abnormal noise is generated in the real space 110.

In a case where the instrument 114 is provided in the apparatus 118 included in the real space 110, when the apparatus 118 is an apparatus (for example, an X-ray diffraction apparatus) that generates the radiation, by each of the instruments 114 provided in a plurality of apparatuses 118 continuously acquiring an output status of the radiation in the apparatus 118, it may be possible to obtain a finding about an radiation dose of the radiation in the real space 110. In such a case, it is preferable that the sense information (information on the radiation dose of the radiation) is continuously acquired. For example, when the apparatus 118 is an apparatus that changes the state of the substance by using a gas of a particular type, by each of the instruments 114 provided in the plurality of apparatuses continuously acquiring at least one of a flow rate or a pressure of the gas, it may be possible to obtain a finding of a gas concentration in the real space 110. In such a case, it is preferable that the sense information (at least one of the information on the flow rate or the pressure of the gas) is acquired continuously.

The destination setting unit 60 (refer to Fig. 3) may set a position of one candidate from which the sense information is to be initially acquired, as a destination of the moving object 90. The one candidate from which the sense information is to be initially acquired may be specified by the user 130. The destination setting unit 60 may transmit the set position of the destination, to the sense information receiving unit 92 of the moving object 90. The sense information receiving unit 92 may receive the position of the destination. This makes it possible for the moving object 90 to move to the position of the apparatus 118 provided with the instrument 114 from which the sense information is to be initially acquired.

Similarly, the destination setting unit 60 (refer to Fig. 3) may set a position of one candidate from which the sense information is to be secondly acquired, as a destination of the moving object 90. The destination setting unit 60 may transmit the set position of the destination, to the sense information receiving unit 92 of the moving object 90. This makes it possible for the moving object 90 to move to the position of the apparatus 118 provided with the instrument 114 from which the sense information is to be secondly acquired. In this manner, the moving object 90 can move sequentially to the position of the apparatus 118 provided with each of the candidates for the plurality of instruments 114 from which the sense information is to be continuously acquired.

The determination unit 64 (refer to Fig. 3) determines an occurrence of an abnormality in the real space 110, based on a magnitude relationship between the sense information and a predetermined threshold value of the sense information. The threshold value of the sense information may be predetermined by the user 130. The threshold value of the sense information may be determined for each type of the information that is sensed. The threshold value of the sense information determined for each type may be stored in the storage unit 66.

For example, in a case where the sense information is a concentration of a gas of a particular type, a certain concentration above which there is a high probability of causing harm to human health may be specified as a threshold value. In a case where the gas is CO₂ (carbon dioxide) gas, the concentration is, for example, 1000 ppm. For example, in a case where the sense information is a radiation dose, a certain radiation dose above which there is a high probability of causing harm to human health may be specified as a threshold value. The radiation dose is, for example, 500 millisieverts. For example, in a case where the sense information is a flow rate of a fluid, a certain flow rate above which there is a high probability of an occurrence of a water leak, or a certain flow rate below which there is a high probability of a blockage of a flow pipe, may be specified as a threshold value. For example, in a case where the real space 110 includes the instrument 114 which uses a gas, a certain air pressure above which there is a high probability of a gas leak in the real space 110 may be specified as a threshold value. For example, in a case where the sense information is abnormal noise that occurs due to a malfunction of the instrument 114 in the real space 110, a certain magnitude or higher of the abnormal noise at which there is a high probability of a malfunction of the instrument 114 may be specified as a threshold value.

When the determination unit 64 (refer to Fig. 3) determines that an abnormality occurred in the real space 110 based on the sense information, the display unit 30 may display at least the one instrument 114 which sensed the sense information. The display unit 30 may display a position of at least another single instrument 114 which is in less than a threshold distance from the one instrument 114, as a position of the candidate for at least one instrument 114 from which the moving object 90 is to further acquire the sense information. The threshold distance may be predetermined by the user 130 for each type of the sense information. The predetermined threshold distance may be stored in the storage unit 66. When one candidate is specified, the destination setting unit 60 (refer to Fig. 3) may set the position of the specified candidate as a destination of the moving object 90. By the destination setting unit 60 setting the position of the specified candidate as a destination of the moving object 90, the moving object 90 can acquire the sense information of the instrument 114 at the specified position.

For example, when the determination unit 64 determines that an abnormality occurred in a gas concentration of a particular type, by the sense information acquisition unit 20 acquiring a gas concentration measured by another instrument 114 (the gas concentration measuring instrument) which is in a range of less than a threshold distance from the instrument 114 (the gas concentration measuring instrument) which sensed the abnormal gas concentration, it may be possible to obtain a finding about a range of the abnormality of the gas concentration. For example, when the determination unit 64 determines that an abnormality of a radiation dose occurred, by the sense information acquisition unit 20 acquiring a radiation dose measured by another instrument 114 (the radiation dose measuring instrument) which is in a range of less than a threshold distance from the instrument 114 (the radiation dose measuring instrument) which sensed the abnormal radiation dose, it may be possible to obtain a finding about a range of the abnormality of the radiation dose. For example, when the determination unit 64 determines that an abnormality of a flow rate of a fluid occurred, by the sense information acquisition unit 20 acquiring a flow rate measured by another instrument 114 (the flow measuring instrument) which is in a range of less than a threshold distance from the instrument 114 (the flow measuring instrument) which sensed the abnormal flow rate, it may be possible to obtain a finding about a range of the abnormality of the flow rate. For example, when the determination unit 64 determines that an abnormality of an air pressure occurred, by the sense information acquisition unit 20 acquiring an air pressure measured by another instrument 114 (the pressure measuring instrument) which is in a range of less than a threshold distance from the instrument 114 (the pressure measuring instrument) which sensed the abnormal air pressure, it may be possible to obtain a finding about a range of the abnormality of the air pressure. For example, when the determination unit 64 determines that an abnormality of a sound volume occurred, by the sense information acquisition unit 20 acquiring a sound volume measured by another instrument 114 (the sound measuring instrument) which is in a range of less than a threshold distance from the instrument 114 (the sound measuring instrument) which sensed the abnormal sound volume, it may be possible to obtain a finding about a range of the abnormality of the sound volume.

For example, when the determination unit 64 determines that the instrument 114, which is provided in the apparatus 118 included in the real space 110, sensed that an abnormality of a flow rate of a gas occurred, the display unit 30 may display a position of the apparatus 118 which is provided with another instrument 114 and is in a range of less than a threshold distance from the apparatus 118 provided with the instrument 114 which sensed the occurrence of the abnormality, as a position of the apparatus 118 provided with a candidate for at least one instrument 114 from which the moving object 90 is to further acquire the sense information. For example, in a case where the apparatus 118 included in the real space 110 is an apparatus that generates radiation, and the apparatus is provided with a wattmeter that indicates an output of the radiation as the instrument 114, when the determination unit 64 determines that the instrument 114, which is provided in the apparatus 118, sensed that an abnormality occurred in an output of radiation, the display unit 30 may display a position of the apparatus 118 which is provided with another instrument 114 and is in a range of less than a threshold distance from the apparatus 118 provided with the instrument 114 which sensed the occurrence of the abnormality, as a position of the apparatus 118 provided with a candidate for at least one instrument 114 from which the moving object 90 is to further acquire the sense information.

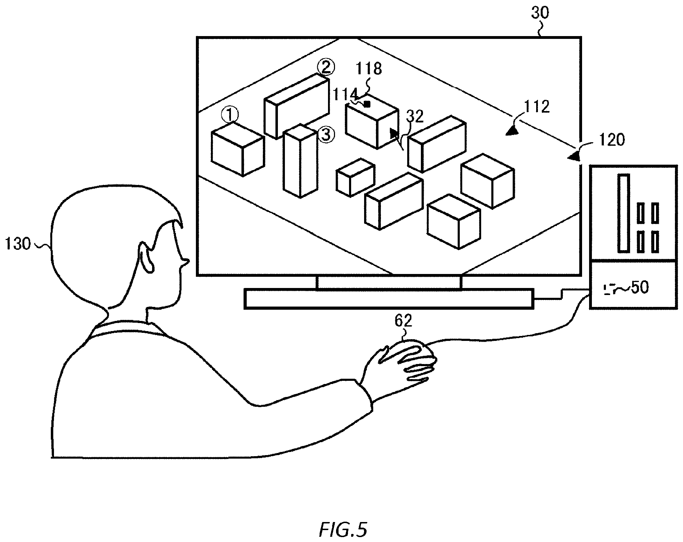

Fig. 5 is a diagram showing another example in the display mode of the display unit 30. The sense information receiving unit 92 of the moving object 90 may acquire a point in time when the sense information is received. The sense information acquisition unit 20 (refer to Fig. 3) may acquire a first point in time when the sense information receiving unit 92-1 of the moving object 90-1 (refer to Fig. 1) receives first sense information, a second point in time when the sense information receiving unit 92-2 of the moving object 90-2 (refer to Fig. 1) receives second sense information, and a third point in time when the sense information receiving unit 92-3 of the moving object 90-3 (refer to Fig. 1) receives third sense information. The first point in time to the third point in time may be points in time at which the sense information receiving unit 92-1 to the sense information receiving unit 92-3 respectively acquire the sense information by which the determination unit 64 determines occurrences of abnormalities.

The display unit 30 may display, on the virtual map 120, order of an occurrence of the abnormality in an identifiable manner. The display unit 30 may display, on the virtual map, the order of the occurrence of the abnormality in an identifiable manner, based on the first point in time to the third point in time. For example, in a case where the first point in time is an earliest point in time, the second point in time is a next earliest point in time, and the third point in time is a latest point in time, and the instrument 114 which sensed the first sense information is the instrument 114-1, the instrument 114 which sensed the second sense information is the instrument 114-2, and the instrument 114 which sensed the third sense information is the instrument 114-3, the display unit 30 may display, in an identifiable manner, a message that the instrument 114-1 sensed the abnormality initially, the instrument 114-2 sensed the abnormality next, and the instrument 114-3 sensed the abnormality yet again. In the example of Fig. 5, the display unit 30 displays numbers indicating the order in which the abnormalities were sensed, on the instrument 114-1 to the instrument 114-3.

The storage unit 66 (refer to Fig. 3) may store order of an occurrence of the abnormality. In the example of Fig. 5, the storage unit 66 stores a fact that the instrument 114-1 sensed the abnormality initially, the instrument 114-2 sensed the abnormality next, and the instrument 114-3 sensed the abnormality yet again. The storage unit 66 may store the order in which the abnormality was sensed, in association with the point in time at which the sense information receiving unit 92 of the moving object 90 received the sense information. In the example of Fig. 5, the storage unit 66 stores the fact that the instrument 114-1 sensed the abnormality initially, the instrument 114-2 sensed the abnormality next, and the instrument 114-3 sensed the abnormality yet again, and each of the points in time (the first point in time to the third point in time) at which the instrument 114-1 to the instrument 114-3 sensed the abnormalities, in association with each other.

The display unit 30 may reproduce and display an occurrence of the abnormality on the virtual map 120 in chronological order. For example, the display unit 30 displays the numbers indicating the order in which the instrument 114-1 to the instrument 114-3 sensed the abnormalities, in chronological order. The reception unit 62 (refer to Fig. 3) may receive a command from the user 130 with a message to reproduce and display the occurrence of the abnormality on the virtual map 120. When the reception unit 62 receives the command from the user 130, the display unit 30 may reproduce and display the occurrences of the abnormalities on the virtual map 120 in chronological order.

The display unit 30 may reproduce and display the occurrences of the abnormalities on the virtual map 120 in chronological order, and may reproduce and display a time interval between the occurrences of the abnormalities. For example, in a case where a first period between the first point in time and the second point in time is one minute, and a second period between the second point in time and the third point in time is two minutes, a ratio of the first period to the second period is 1:2. In this case, for example, five seconds after the display of a message that the instrument 114-1 initially sensed the abnormality, the display unit 30 displays, on the virtual map 120, a message that the instrument 114-2 sensed the abnormality; and ten seconds after the display of a message that the instrument 114-2 sensed the abnormality, the display unit 30 displays, on the virtual map 120, a message that instrument 114-3 sensed the abnormality. This makes it easy for the user 130 to recognize the order and the time interval of the occurrences of the abnormalities on the virtual map 120.

The determination unit 64 (refer to Fig. 3) may determine a degree of significance of an abnormality, based on a difference between the sense information and a predetermined threshold value of the sense information. The determination unit 64 may determine that the greater the difference is, the more significant the abnormality is. The determination unit 64 may rank the degree of significance of the abnormality based on a magnitude of the difference. For example, when the magnitude of the difference includes three ranks of a first magnitude, a second magnitude that is greater than the first magnitude, and a third magnitude that is greater than the second magnitude, the determination unit 64 may rank the degree of significance of the abnormality to be light when the difference is the first magnitude; may rank the degree of significance of the abnormality to be intermittent when the difference is the second magnitude; and may rank the degree of significance of the abnormality to be heavy when the difference is the third magnitude.

The display unit 30 may display, on the virtual map 120, the degree of significance in an identifiable manner. For example, the display unit 30 displays, on the virtual map 120, any indication of being light, intermittent, or heavy, as a degree of significance of the abnormality. This makes it possible for the user 130 to recognize the degree of significance of the abnormality on the display unit 30.

The display unit 30 may display, on the virtual map 120, the instrument 114 from which the sense information receiving unit 92 of the moving object 90 is not able to receive the sense information. The instrument 114 from which the sense information is not able to be received refers to the instrument 114 in a state in which the sense information receiving unit 92 is not able to receive the sense information due to, for example, the apparatus 118 which is provided with the instrument 114, being tilted, falling over, or the like. By the display unit 30 displaying, on the virtual map 120, the instrument 114 from which the sense information is not able to be received, it is possible for the user 130 to recognize, on the virtual map 120, the instrument 114 which may be falling over or the like.

When the sense information receiving unit 92 is an image capture unit, the image capture unit may receive the sense information by an image in which the instrument 114 is captured. When the display unit 30 displays, on the virtual map 120, the instrument 114 from which the sense information is not able to be received, the display unit 30 may display, on the virtual map 120, an image of the instrument 114 from which the image capture unit is not able to receive the sense information. This makes it possible for the user 130 to recognize, by the image, the instrument 114 from which the sense information is not able to be received. This makes it easy for the user 130 to recognize whether the instrument 114 is falling over or the like.

The information processing method according to an embodiment of the present invention will be described by using the information processing apparatus 100 shown in Fig. 3 as an example.

The information processing method includes a virtual map acquisition step, a sense information acquisition step, and a display step. The virtual map acquisition step is a step in which the virtual map acquisition unit 10 acquires the three-dimensional virtual map 120 corresponding to the real space 110 in which the moving object 90 moves. The sense information acquisition step is a step in which the sense information acquisition unit 20 acquires the sense information acquired by the moving object 90 in the real space 110. The display step is a step in which the display unit 30 displays the sense information on the virtual map 120. The sense information is information sensed by the instruments 114 included in the real space 110.

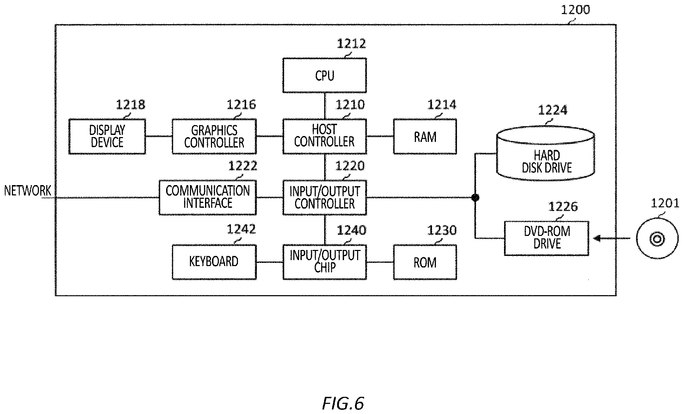

Fig. 6 shows an example of a configuration of a computer 1200 in which a plurality of aspects of the present invention may be embodied entirely or partially. A program that is installed in the computer 1200 can cause the computer 1200 to function as operations associated with apparatuses according to the embodiments of the present invention or one or more "units" of the apparatuses, or can cause the computer 1200 to execute the operations or the one or more "units" thereof, and/or can cause the computer 1200 to execute processes according to the embodiments of the present invention or steps of the processes. Such a program may be executed by a CPU 1212 to cause the computer 1200 to execute certain operations associated with some or all blocks in the flowcharts or block diagrams described in the present specification. Processes according to embodiments of the present invention or steps of the processes may also be performed on a cloud network or the like.

The computer 1200 according to the present embodiment includes the CPU 1212, a RAM 1214, a graphics controller 1216, and a display device 1218, which are connected to each other by a host controller 1210. The computer 1200 also includes input/output units such as a communication interface 1222, a hard disk drive 1224, a DVD-ROM drive 1226, and an IC card drive, which are connected to the host controller 1210 via an input/output controller 1220. The computer also includes legacy input/output units such as a ROM 1230 and a keyboard 1242, which are connected to the input/output controller 1220 via an input/output chip 1240.

The CPU 1212 operates in accordance with programs stored in the ROM 1230 and the RAM 1214, and controls each unit accordingly. The graphics controller 1216 acquires image data generated by the CPU 1212 on a frame buffer or the like provided in the RAM 1214 or in the graphics controller 1216 itself, and displays the image data on the display device 1218.

The communication interface 1222 communicates with other electronic devices via a network. The hard disk drive 1224 stores programs and data to be used by the CPU 1212 in the computer 1200. The DVD-ROM drive 1226 reads programs or data from a DVD-ROM 1201, and provides the programs or data to the hard disk drive 1224 via the RAM 1214. The IC card drive reads the program and data from an IC card, and/or writes the program and data to the IC card.

The ROM 1230 has stored therein a boot program or the like to be executed by the computer 1200 at the time of activation, and/or a program that depends on the hardware of the computer 1200. The input/output chip 1240 may also connect various input/output units to the input/output controller 1220 via a parallel port, a serial port, a keyboard port, a mouse port or the like.

Programs are provided by a computer-readable storage medium such as the DVD-ROM 1201 or an IC card. The programs are read from the computer-readable storage medium, installed on the hard disk drive 1224, the RAM 1214, or the ROM 1230, which are also examples of a computer-readable storage medium, and executed by the CPU 1212. Information processing written in these programs is read by the computer 1200, and provides cooperation between the programs and the various types of hardware resources described above. An apparatus or method may be configured by achieving the operation or processing of information in accordance with the usage of the computer 1200.

For example, if communication is made between the computer 1200 and external devices, the CPU 1212 may execute a communication program loaded on the RAM 1214, and instruct the communication interface 1222 to perform communication processing based on the processing written in the communication program. Under the control of the CPU 1212, the communication interface 1222 reads transmission data stored in a transmission buffer region provided in a recording medium such as the RAM 1214, the hard disk drive 1224, the DVD-ROM 1201, or an IC card, and transmits the read transmission data to the network, or writes reception data received from the network into a reception buffer region or the like provided in the recording medium.

The CPU 1212 may also cause all or required portions of the files or databases stored in an external recording medium such as the hard disk drive 1224, the DVD-ROM drive 1226 (DVD-ROM 1201), or an IC card to be read by the RAM 1214, and perform various types of processing on the data on the RAM 1214. Next, the CPU 1212 may write the processed data back into the external recording medium.

Various types of information such as various types of programs, data, tables and databases may be stored in the recording medium for information processing. The CPU 1212 may execute, on the data read from the RAM 1214, various types of processing including various types of operations, information processing, conditional judgement, conditional branching, unconditional branching, information search/replacement, or the like described throughout the present disclosure and designated by instruction sequences of the programs, to write the results back to the RAM 1214. In addition, the CPU 1212 may search for information in a file, a database, or the like in the recording medium. For example, when a plurality of entries, each having an attribute value of a first attribute associated with an attribute value of a second attribute, are stored in the recording medium, the CPU 1212 may search the plurality of entries for an entry whose attribute value of the first attribute matches a designated condition, and read the attribute value of the second attribute stored in the entry, thereby acquiring the attribute value of the second attribute associated with the first attribute that meets a predetermined condition.

The programs or software modules in the above description may be stored on the computer 1200 or a computer-readable storage medium near the computer 1200. Further, a recording medium such as a hard disk or a RAM provided in a server system connected to a dedicated communication network or the Internet can be used as a computer-readable storage medium, which provides programs to the computer 1200 via the network.

While the present invention has been described by way of the embodiments, the technical scope of the present invention is not limited to the scope described in the above-described embodiments. It is apparent to persons skilled in the art that various alterations or improvements can be made to the above-described embodiments. It is also apparent from the description of the claims that the form to which such alterations or improvements are made can be included in the technical scope of the present invention.

It should be noted that the operations, procedures, steps, stages, and the like of each process performed by an apparatus, system, program, and method shown in the claims, the specification, or the drawings can be realized in any order as long as the order is not indicated by "prior to," "before," or the like and as long as the output from a previous process is not used in a later process. Even if the operation flow is described by using phrases such as "first" or "next" for the sake of convenience in the claims, specification, and drawings, it does not necessarily mean that the process must be performed in this order.

### EXPLANATION OF REFERENCES

10: virtual map acquisition unit; 20: sense information acquisition unit; 30: display unit; 32: pointer; 50: control unit; 60: destination setting unit; 62: reception unit; 64: determination unit; 66: storage unit; 90: moving object; 92: sense information receiving unit; 94: position information acquisition unit; 100: information processing apparatus; 110: real space; 112: road surface; 114: instrument; 116: sense information transmission unit; 118: apparatus; 120: virtual map; 130: user; 1200: computer; 1201: DVD-ROM; 1210: host controller; 1212: CPU; 1214: RAM; 1216: graphics controller; 1218: display device; 1220: input/output controller; 1222: communication interface; 1224: hard disk drive; 1226: DVD-ROM drive; 1230: ROM; 1240: input/output chip; 1242: keyboard.

## Claims

1. An information processing apparatus comprising:
a virtual map acquisition unit which acquires a three-dimensional virtual map corresponding to a real space in which a moving object moves;
a sense information acquisition unit which acquires sense information acquired by the moving object in the real space; and
a display unit which displays the sense information on the virtual map, wherein
the sense information is information sensed by instruments included in the real space.

2. The information processing apparatus according to claim 1, wherein the display unit displays a position of at least one instrument among the instruments on the virtual map, and displays, when one instrument among the instruments is specified, the sense information sensed by the one specified instrument.

3. The information processing apparatus according to claim 1 or 2, wherein
the display unit displays, on the virtual map, positions of candidates for at least one instrument among the instruments from which the moving object is to acquire the sense information,
the information processing apparatus further comprising a destination setting unit which sets, when one candidate among the candidates is specified, a position among the positions of the specified candidate as a destination of the moving object.

4. The information processing apparatus according to claim 1 or 2, wherein
the display unit displays, on the virtual map, positions of candidates for a plurality of instruments, each of which is the instrument from which the moving object is to continuously acquire the sense information,
the information processing apparatus further comprising a destination setting unit which sets a position among the positions of one candidate among the candidates from which the sense information is to be initially acquired, as a destination of the moving object.

5. The information processing apparatus according to any one of claims 1 to 4, further comprising: a determination unit which determines an occurrence of an abnormality in the real space, based on a magnitude relationship between the sense information and a predetermined threshold value of the sense information.

6. The information processing apparatus according to claim 5, wherein the display unit displays, on the virtual map, order of an occurrence of the abnormality in an identifiable manner.

7. The information processing apparatus according to claim 6, further comprising:
a storage unit which stores order of an occurrence of the abnormality, wherein
the display unit reproduces and displays an occurrence of the abnormality on the virtual map in chronological order.

8. The information processing apparatus according to any one of claims 5 to 7, wherein
the determination unit determines a degree of significance of the abnormality, based on a difference between the sense information and the threshold value, and
the display unit displays, on the virtual map, the degree of significance in an identifiable manner.

9. The information processing apparatus according to any one of claims 1 to 8, wherein
the display unit displays, on the virtual map, the instrument from which the sense information receiving unit is not able to receive the sense information.

10. The information processing apparatus according to claim 9, wherein
the sense information receiving unit is an image capture unit which captures an image of the instrument,
the image capture unit receives the sense information by an image in which the instrument is captured, and
the display unit displays, on the virtual map, an image of the instrument from which the image capture unit is not able to receive the sense information.

11. An information processing method comprising:
acquiring a three-dimensional virtual map corresponding to a real space in which a moving object moves;
acquiring sense information acquired by the moving object in the real space; and
displaying the sense information on the virtual map, wherein
the sense information is information sensed by instruments included in the real space.

12. An information processing program which causes a computer to execute the information processing method according to claim 11.
